# EUROPÄISCHE PATENTANMELDUNG

(11) **EP 1 101 679 A1**
(43) Veröffentlichungstag der Anmeldung: **23.05.2001**
(21) Anmeldenummer: 00125064.6
(22) Anmeldetag: 17.11.2000
(51) Int. Cl.: B60T 8/36, B60T 13/68, F16K 31/06, F16K 15/14, F16J 15/32, F16J 15/02

(54) **Magnetventil mit einem Rückschlagventil**

(30) Priorität: 20.11.1999 DE 19955887
(71) Anmelder: ROBERT BOSCH GMBH, 70442 Stuttgart (DE)
(72) Erfinder: Gruschwitz, Peggy, 70329 Stuttgart (DE); Oehler, Martin, 74189 Weinsberg (DE); Bauer, Heike, 70376 Stuttgart (DE); Nicodemus, Rolf, Dr., 74321 Bietigheim-Bissingen (DE); Schindler, Ralf, 71229 Leonberg (DE)

(57) **Zusammenfassung**

Ein Magnetventil (1) weist ein zwischen einem Druckmitteleinlaß (17) und einem Druckmittelauslaß (18) angeordnetes Sitzventil (26) und im Bypass zu diesem ein Rückschlagventil (30) mit einem Formring (41) als Schließkörper und einer Kreisringfläche (45) als Ventilsitz auf. In die Kreisringfläche (45) münden kreisförmig um einen Druckmitteldurchlaß (33) des Magnetventils (1) angeordnete Druckmitteldurchlässe (47) des Rückschlagventils ein. Eine radial einwärts gerichtete Dichtlippe (43) des Schließkörper-Formrings (41) greift zwischen dem Druckmitteldurchlaß (33) des Magnetventils (1) und den Druckmitteldurchlässen (47) des Rückschlagventils (30) an der Kreisringfläche (45) an.

Das Magnetventil (1) ist in schlupfgeregelten hydraulischen Bremsanlagen von Kraftfahrzeugen verwendbar.

## Beschreibung

### Stand der Technik

Die Erfindung geht aus von einem Magnetventil nach der Gattung des Patentanspruchs 1.

Es ist schon ein derartiges Magnetventil mit einem Rückschlagventil bekannt (DE 40 41 506 C2), dessen Schließkörper als Dichtmanschette mit einer Dichtlippe ausgebildet ist. Die Dichtmanschette ist in einer Umlaufnut eines Ventilkörpers angeordnet und greift mit ihrer Dichtlippe an der einen Dichtsitz bildenden Umfangswandung einer den Ventilkörper aufnehmenden Bohrung eines Hydroaggregats einer schlupfgeregelten hydraulischen Bremsanlage für Kraftfahrzeuge an. Die Dichtmanschette ist bei ordnungsgemäßer Montage sehr funktionssicher; sie kann jedoch beim Fügen in die Umlaufnut des Ventilkörpers übermäßig aufgeweitet und dadurch beschädigt oder fehlerhafterweise mit falscher Wirkrichtung montiert werden.

### Vorteile der Erfindung

Das erfindungsgemäße Magnetventil mit den Merkmalen des Patentanspruchs 1 hat demgegenüber den Vorteil, daß die Dichtlippe des Schließkörper-Formrings in Übereinstimmung mit der Fließrichtung des durch das Sitzventil des Magnetventils und das Rückschlagventils hindurchgeführten Druckmittelstromes axial belastet und entlastet wird und daher eine hohe Ansprechempfindlichkeit hat. Darüber hinaus ist der Schließkörper-Formring aufgrund der Dichtlippenanordnung bei der Montage keiner Aufweitung unterworfen.

Durch die in den Unteransprüchen aufgeführten Maßnahmen sind vorteilhafte Weiterbildungen und Verbesserungen des im Patentanspruch 1 beschriebenen Magnetventils gegeben.

Die im Anspruch 2 offenbarte Ausgestaltung des Schließkörper-Formrings schließt Montagefehler hinsichtlich der Wirkrichtung des Rückschlagventils aus.

Mit der im Anspruch 3 gekennzeichneten Weiterbildung des Magnetventils ist eine erleichterte Montage des Schließkörper-Formrings in die Umlaufnut möglich, wenn abschließend die Ringscheibe gefügt wird.

### Zeichnung

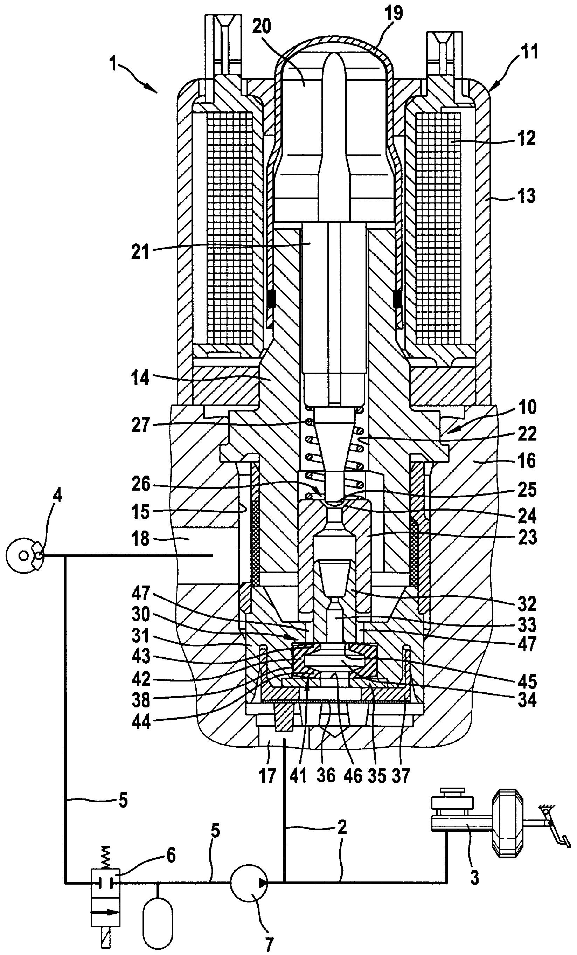

Ein Ausführungsbeispiel der Erfindung ist in der Zeichnung anhand eines Längsschnitts durch ein Magnetventil vereinfacht dargestellt und in der nachfolgenden Beschreibung näher erläutert.

### Beschreibung des Ausführungsbeispiels

Ein in der Zeichnung wiedergegebenes Magnetventil 1 ist in einer nur ausschnittsweise dargestellten schlupfgeregelten hydraulischen Bremsanlage von Kraftfahrzeugen in einer Leitungsverbindung 2 zwischen einem Hauptbremszylinder 3 und einem Radbremszylinder 4 angeordnet. In einer das Magnetventil 1 umgehenden Leitungsverbindung 5 der Bremsanlage sind ein zweites Magnetventil 6 und eine Pumpe 7 angeordnet. Das stromlos offene Magnetventil 1 und das stromlos geschlossene Magnetventil 6 sind Teile einer Einrichtung zur schlupfabhängigen Modulation des im Radbremszylinder 4 wirkenden Bremsdrucks.

Das Magnetventil 1 ist aus zwei Baugruppen gebildet: Einem hydraulischen Teil 10 und einem elektrischen Teil 11, der auf den hydraulischen Teil aufgesteckt ist. Der elektrische Teil 11 besteht im wesentlichen aus einer Magnetspule 12 und einem Joch 13. Der hydraulische Teil 10 weist ein Ventilgehäuse 14 auf, das mittels einer Verstemmverbindung in einer Aufnahmebohrung 15 eines Ventilblocks 16 befestigt ist. In die Aufnahmebohrung 15 mündet bodenseitig ein mit dem Hauptbremszylinder 3 in Verbindung stehender Druckmitteleinlaß 17 ein; umfangsseitig geht von der Aufnahmebohrung ein Druckmittelauslaß 18 aus, der mit dem Radbremszylinder 4 in Verbindung steht. Außerhalb des Ventilblocks 16 ist an dem Ventilgehäuse 14 ein vom elektrischen Teil 11 umfaßter Ventildom 19 befestigt. In diesem ist ein längsbewegbar geführter Magnetanker 20 aufgenommen, der mit einem Stößel 21 zusammenwirkt. Der Stößel 21 erstreckt sich in einer Durchgangsbohrung 22 des Ventilgehäuses 14, in der ventildomabgewandt ein hülsenförmiger Ventilkörper 23 sitzt. Dieser weist einen mit dem Druckmitteleinlaß 17 in Verbindung stehenden Ventilsitz 24 auf. Dem Ventilsitz 24 ist ein am Stößel 21 ausgebildetes Schließglied 25 zugeordnet. Der Ventilsitz 24 und das Schließglied 25 bilden ein Sitzventil 26, welches aus der gezeichneten Offenstellung durch Erregung der Magnetspule 12 entgegen der Kraft einer Rückstellfeder 27 in seine Schließstellung überführbar ist.

Für einen schnellen Bremsdruckabbau im Radbremszylinder 4 und insbesondere für den Fall, daß das Magnetventil 1 fehlerhafterweise in seiner Schließstellung verharrt, ist ein im Bypass zum Sitzventil 26 angeordnetes Rückschlagventil 30 vorgesehen. Hierzu ist in der Aufnahmebohrung 15 des Ventilblocks 16 in dem zwischen dem Druckmitteleinlaß 17 und dem Druckmittelauslaß 18 liegenden Raum ein den Bohrungsquerschnitt ausfüllendes Ventilbauteil 31 aufgenommen, welches mit einem zentralen Ansatz 32 passend in den Ventilkörper 23 eingreift. Das aus einem Kunststoff gespritzte, im wesentlichen rotationssymmetrische Ventilbauteil 31 hat einen in seiner Längsachse verlaufenden Durchlaß 33, der ansatzabgewandt in eine kreiszylindrische Ausnehmung 34 übergeht. Gegen den Druckmitteleinlaß 17 der Aufnahmebohrung 15 hin ist die Ausnehmung 34 durch eine Ringscheibe 35 und eine Filterscheibe 36 in einem ansatzabgewandt auf das Ventilbauteil 31 aufgesteckten Abschlußteil 37 abgeschlossen, der die Ringscheibe 35 in ihrer Lage sichert. Die Ausnehmung 34 des Ventilbauteils 31 bildet zusammen mit der Ringscheibe 35 eine nach radial innen offene Umlaufnut 38 des Magnetventils 1, welche konzentrisch zu der Achse des Druckmitteldurchlasses 33 im Ventilbauteil 31 verläuft.

In der kreiszylindrischen Ausnehmung 34 des Ventilbauteils 31 ist als Schließkörper des Rückschlagventils 30 ein Formring 41 aus gummielastischem Werkstoff aufgenommen. Der Formring 41 hat einen Rücken 42, mit dem er mit radialer Pressung an dem Umfang der Ausnehmung 34 abgestützt ist. Von dem Rücken 42 des Schließkörper-Formrings 41 geht an beiden Stirnseiten jeweils eine radial nach innen gerichtete Dichtlippe 43 und 44 aus. Der Formring 41 ist bezüglich einer mittig zwischen den beiden Dichtlippen 43 und 44 verlaufenden Radialebene symmetrisch sowie bezüglich der Achse der Ausnehmung 34 rotationssymmetrisch. Die beiden Dichtlippen 43 und 44 greifen mit geringer Vorspannung an radial verlaufenden Kreisringflächen 45 und 46 an, von denen die eine Kreisringfläche 45 ringscheibenabgewandt die Ausnehmung 44 begrenzt. Die andere Kreisringfläche 46 ist von der Ringscheibe 35 gebildet. Die Kreisringfläche 45 ist der Ventilsitz des Rückschlagventils 30. In der Kreisringfläche 45 liegt mittig der Druckmitteldurchlaß 33 des Magnetventils 1. In die Kreisringfläche 45 münden kreisförmig um den Druckmitteldurchlaß 33 des Magnetventils 1 angeordnete Druckmitteldurchlässe 47 des Rückschlagventils 30. Diese sind als parallel zum Druckmitteldurchlaß 33 verlaufende Bohrungen im Ventilbauteil 31 gestaltet und stehen druckmittelleitend mit dem Druckmittelauslaß 18 in Verbindung. Die Dichtlippe 43 des Schließkörper-Formrings 41 greift zwischen dem Druckmitteldurchlaß 33 des Magnetventils 1 und den Druckmitteldurchlässen 47 des Rückschlagventils 30 an der Kreisringfläche 45 an.

In der Zeichnung ist das Rückschlagventil 30 in der Schließstellung gezeichnet. Die Vorspannung der ventilsitzseitigen Dichtlippe 43 stellt gegebenenfalls unterstützt durch eine geringe Druckdifferenz zwischen dem Druckmitteleinlaß 17 und dem Druckmittelauslaß 18 sicher, daß die Schließstellung auch bei Formabweichungen des Ventilsitzes gegeben ist, wie sie bei einem spritzgegossenen Ventilbauteil 31 auftreten können. Eine geringe Druckdifferenz zwischen dem Druckmittelauslaß 18 und dem Druckmitteleinlaß 17 des Magnetventils 1 bewirkt ein Abheben der Dichtlippe 43 vom Ventilsitz, so daß Druckmittel bei geschlossenem Sitzventil 26 vom Druckmittelauslaß 18 durch die Druckmitteldurchlässe 47 des Rückschlagventils 30 zum Druckmitteleinlaß 17 fließen kann.

## Patentansprüche

1. Magnetventil (1), insbesondere für schlupfgeregelte hydraulische Bremsanlagen von Kraftfahrzeugen, mit einem zwischen einem Druckmitteleinlaß (17) und einem Druckmittelauslaß (18) angeordneten Sitzventil (26) und einem im Bypass zum Sitzventil (26) angeordneten Rückschlagventil (30) mit einem Schließkörper (41) und einem Ventilsitz (45), wobei der Schließkörper (41) einen Formring aus gummielastischem Werkstoff ist, der konzentrisch zu einem Druckmitteldurchlaß (33) verlaufend in einer Umlaufnut (38) des Magnetventils (1) zwischen radial verlaufenden Kreisringflächen (45, 46) aufgenommen ist und mit einer Dichtlippe (43) mit Vorspannung am Ventilsitz (45) angreift, dadurch gekennzeichnet,
daß der Ventilsitz (45) des Rückschlagventils (30) eine (45) der Kreisringflächen (45, 46) ist, in welcher mittig der Druckmitteldurchlaß (33) des Magnetventils (1) liegt, daß in die ventilsitzseitige Kreisringfläche (45) kreisförmig um den Druckmitteldurchlaß (33) des Magnetventils (1) angeordnete Druckmitteldurchlässe (47) des Rückschlagventils (30) münden
und daß die radial einwärts gerichtete Dichtlippe (43) des Schließkörper-Formrings (41) zwischen dem Druckmitteldurchlaß (33) des Magnetventils (1) und den Druckmitteldurchlässen (47) des Rückschlagventils (30) an der ventilsitzseitigen Kreisringfläche (45) angreift.

2. Magnetventil nach Anspruch 1, dadurch gekennzeichnet, daß der Schließkörper-Formring (41) symmetrisch zu einer Radialebene ausgebildet ist und zwei radial einwärts verlaufende Dichtlippen (43, 44) aufweist.

3. Magnetventil nach Anspruch 1, dadurch gekennzeichnet, daß der Schließkörper-Formring (41) in einer kreiszylindrischen Ausnehmung (34) eines aus einem Kunststoff spritzgegossenen Ventilbauteils (31) aufgenommen ist, das mit einer die Ausnehmung (34) abschließenden Ringscheibe (35) die Umlaufnut (38) bildet.

4. Magnetventil nach Anspruch 3, dadurch gekennzeichnet, daß das Ventilbauteil (31) im wesentlichen rotationssymmetrisch ausgebildet ist.
